# EUROPEAN PATENT SPECIFICATION

(11) **EP 3 577 173 B1**
(45) Date of publication and mention of the grant of the patent: **02.12.2020**
(21) Application number: 18708203.7
(22) Date of filing: 01.02.2018
(51) Int. Cl.: C09D 11/00

(54) **COMPOSITIONS CONTAINING FATTY ACID ESTERS OF VEGETABLE ORIGIN AS SOLVENTS**
ZUSAMMENSETZUNGEN MIT FETTSÄUREESTERN PFLANZLICHEN URSPRUNGS ALS LÖSUNGSMITTEL
COMPOSITIONS CONTENANT DES ESTERS D'ACIDES GRAS D'ORIGINE VÉGÉTALE COMME SOLVANTS

(30) Priority: 03.02.2017 IT 201700012056
(43) Date of publication of application: 11.12.2019
(73) Proprietor: Benessere, Vincenzo, 80134 Napoli (IT); Cucciolito, Maria Elena, 80124 Napoli (IT); De Luca, Aldo, 80122 Napoli (IT); Di Serio, Martino, 84013 Cava de Tirreni (SA) (IT); Ruffo, Francesco, 80134 Napoli (IT)
(72) Inventor: Benessere, Vincenzo, 80134 Napoli (IT); Cucciolito, Maria Elena, 80124 Napoli (IT); De Luca, Aldo, 80122 Napoli (IT); Di Serio, Martino, 84013 Cava de Tirreni (SA) (IT); Ruffo, Francesco, 80134 Napoli (IT)
(74) Representative: Primiceri, Maria Vittoria
(86) International application number: PCT/IB2018/050632
(87) International publication number: WO 2018/142320

(56) References cited:
- EP-A1- 1 344 802
- EP-A1- 2 208 763
- EP-A1- 2 548 929
- WO-A1-2008/024968
- DE-A1-102007 021 134
- US-A1- 2011 148 980
- US-A1- 2013 194 362

## Description

### Technical Field of the Invention

The present invention relates to compositions comprising fatty acid esters of vegetable origin as solvents, more in particular the invention relates to the formulation of bases for resin-based paints belonging either to the family of ROSIN MODIFIED ESTER RESINS or to the family of MALEIC RESINS, and containing a solvent consisting of a C9 fatty acid (pelargonic acid) esterified with C1-C10 linear and branched alcohols with a degree of purity (75-95%) by mass, and methylpelargonate or pelargonic acid to complement to 100.

Within the scope of the present invention, the term "base(s) for paints" means the base(s) for coating materials, where coating materials are chosen among: paints, inks, varnishes, lacquers, enamels and coatings in general to protect, decorate and impregnate surfaces.

In the following, the term base(s) for paints and base(s) for coating materials are to be regarded as synonyms for the purposes of the present invention.

### Prior Art

The scope of the invention concerns the formulation of bases for paints containing generally: a solvent, and a resin derived from rosin and selected from those most widely used for paint-based printing inks (ROSIN MODIFIED ESTER RESINS or MALEIC RESINS).The above-mentioned bases for paints can be used for the formulation of paints useful for the protection of surfaces, preferably of wood and ceramics, as protective paints of printed matter, preferably in paper and cardboard, and as a base in the composition of printing inks.

The paints used as protection of surfaces and printed matter can be either transparent or coloured with dyes soluble in the used solvent, which is subsequently added to the dissolution of the resin in the chosen solvent.

The paint may be used for the preparation of printing inks with the addition of a pigment. Printing ink compositions comprising fatty acid esters and varnish are disclosed in EP 2 548 929 and US 2013/01984362.

The term resin is used to describe a solid or liquid non-crystalline material of a species with a high molecular weight. Such materials often don't have a precise melting point. The resins used in paints for surface treatment and printing inks contribute to the properties of hardness, brightness, adhesion and flexibility in anink. They also represent the binder for the pigment.

The general process of the production of paint involves grinding the resin, that is provided solid in flakes in presence of the solvent, to obtain a fine particle size with a Cowles-type propeller for a time of 15 minutes at room temperature. The medium thus obtained is heated up to 120-150 °C for at least one hour, and then cooled to 80-90 °C. At this temperature, an antioxidant (generally BHT) is added up to 1% w/w. Then, the fluid is filtered three times through gauze filters (100 µm, 50 µm, and 25 µm).

The resins are divided into two categories: natural and synthetic. In the field of natural resins, most ofcommercially availablematerials are represented by rosin or *colofonia,* that derives directly from the drying of the resins engraved from the bark of pine trees.

Such resin is obtained tapping the living trees, sometimes with the help of an artificial extractor to accelerate the flow of material coming out of the engravings on the bark of the tree. Its price has increased slightly over the last ten years, even if there has been a small drop of its use. The production of rosin from living organisms proves to be an ecological process, differently from those exploiting raw fossils and entire tree trunks, because the rosin resin is a renewable starting material, and then it regenerates in times compatible for the production of printing inks.

The rosin tends to crystallize in a solution of mineral oils. Also, the paints made with this resin do not dry very well and require a long time for their superficial drying.

Thus, its main use is as a raw material to produce chemically modified derivatives, such as dimerized and polymerized rosin, *limited rosin* (rosin soaps or resinate metals), rosin esters, including maleic adducts, fumaric adducts or even modified resin in phenolic and alkyd resins.

The modified phenolic resins are also called "Rosin Modified Ester Resin", CAS: 68152-70-5.These resins have a widespread use in all types of carrier systems for printing inks and comprise many different qualities. Generally, they provide glossy finishes with a good chemical resistance, and are compatible with alkyd species and other resins to give high gloss printing inks with good properties of seizure resistance.

The process for obtaining the "Rosin Modified Ester" phenolic resins provides the reaction between rosin (approximately 85%) and a phenolic resin (about 15%) at 150 °C. Subsequently, the temperature is increased up to 250°C with the addition of glycerol or other polyalcohols in order to esterify the rosin acid. The functional properties of these resins depend on many factors, such as the chemical nature of the phenolic substituent, the used alcohol and the operating conditions of the plant.

"Rosin Modified Ester" phenolic resins are resins soluble in mineral oils and aromatic hydrocarbons, and generally require high temperatures (about 120 °C or higher) to solubilize. Some commercially available resins of this type are: YSER K16, YSER K4, BREMAPAL 2080, TERGRAF 940, TERGRAF 908, SYLVALITE RE100.

In recent years, vegetable-based esters capable of solubilizing the "Rosin Modified Ester Resins" have been developed. Such solvents derive from the esterification of fatty acids with a C16/C18/C18:1 chain with C1-C10[1] linear and branched alcohols. The dissolution of the "Rosin Modified Ester" phenolic resins using these solvents provides times longer than 45' at a temperature of 150 °C. The contents of resin that could be dissolved in these conditions do not exceed 45% by mass[2].

As an alternative, triglycerides obtained by esterification of glycerol and C5-C22 fatty acids (WO 2008/024968) have been proposed. However, the costs of these solvents are high (about 4 times than a fatty acid ester with monohydric alcohol) and often, despite having high performance in the solubilisation, they are not competitive against mineral solvents or fatty acid esters commercially availableup to now.

Another class of synthetic resins widely used in printing inks is that of maleic or modified maleic resins, CAS: 8050-28-0 (Maleic Resin) especially in the field of printing of magazines (heatset) and newspapers (coldset). The maleic anhydride reacts by means of a Diels-Alder reaction with the natural rosin to give the desired maleic resin.

The rosin-based resins in formulations of inks and paints have the function of giving all the physical and rheological properties to the final product, i.e. sliding properties, surface resistance, superficial drying, elasticity of the final product, and in the case of inks, of allowing the pigment transfer, by means of its dispersion, from the spreading equipment (for example, a printer) to the medium to be decorated or protected. There are commercially available bases for paints consisting of solvent and resin, which are used to disperse pigments, grinding varnish, or to act as overprint varnish. One of these bases for paints is the Setalin P7000 rosin compound dissolved in suitable solvents.

The properties of these resins vary with the amount of existing rosin and maleic anhydride, and are divided into three main classes, which, according to the monomer composition and the degree of polymerization, result:
1) soluble in ethyl alcohol
2) soluble in glycols
3) soluble in mineral oils.

The present inventionregards Category 3, since these resins are the only compatible with the solvents which are the subject of this invention, proposed for replacing the existing mineral oils. Some resins of this type and commercially available are: PERSEUS I, ERKAMAR VP 5089, SYLVAPRINT MM 4617. The other two types of resins are not compatible with the family of solvents mentioned in this invention. Mineral-based solvents of type D120/D140 (where 120 and 140 are the respective flash points in °C) and vegetable solvents (2-ethylhexyl palmitate, rapeseed biodiesel) commercially available are able to dissolve these resins in long times at 120°C[2].

As it can be seen from the description of the prior art, the preparation of paint bases using synthetic resins of the Rosin Modified Ester Resin or Maleic Resin type derived from the modification of natural resins, and which are the most used in the formulation of printing inks, has many drawbacks:
1) the need of using long times and high temperatures for the dissolution;
2) in some cases, the impossibility of avoiding the use of mineral-origin solvents due to the insolubility of resins;
3) the need to maintain the resin concentration in the solvents below 45% in order to ensure a complete dissolution.

### Summary of invention

The present invention relates to the formulation of the bases for resin-based coating materials that are synthetic derivatives of rosin and belong either to the family of ROSIN MODIFIED ESTER RESINS or to the family of MALEIC RESINS. Such formulations of bases for coating materials are liquid and contain, as a solvent, one or more esters according to the general formula (I), obtained by the combination of pelargonic acid (a C9 saturated fatty acid, preferably of vegetable origin) with ROH alcohols, in which the group R may be linear or branched with carbon atoms comprised between 1 and 10. This solvent resulted surprisingly effective regarding the above mentioned resins, allowing dissolutions up to 60% w/w or more in mass of resin, contrary to values not higher than 45% of the conventional mineral-origin D100/D120/D140 (where 100, 120 and 140 are the respective flash points in °C) or vegetable-origin (C12-C18 fatty acids esters)solvents.

Another subject of the invention is a process for obtaining the formulation of a base for coating materials, comprising the steps of mixing the resin (up to 60% w/w or more) in the solvent containing the compounds of general formula (I) at a temperature <100 °C for a time sufficient to solubilize the resin, typically a time shorter than 2 hours, preferably about 15-60 minutes.

Another subject is the use of the esters of general formula (I) in combination with the rosin-derived resins in quantities exceeding 45% w/w of resin for the preparation of a formulation of bases for coating materials, where the coating materials are chosen among: paints, inks, varnishes, lacquers, enamels and coatings in general to protect, decorate and impregnate surfaces; in particular, the use is destined to the field of printing inks and paints. Still a further subject of the invention is the use of the base for coating materials, where coating materials are chosen among: paints, inks, varnishes, lacquers, enamels and coatings in general to protect, decorate and impregnate surfaces. The base for coating materials can be used as such or mixed with other components, for example selected from: 2-3% w/w antioxidants, 4-5% w/w desiccants, 1-2% w/w rheology modifiers, 10-15% w/w pigments, 6-8% w/w alkyd resins, 2-4% w/w polyethylene waxes, to prepare paints and inks. The base for the coating materials, paints and inks of the invention containing it may be applied to substrates as coating or can be used to impregnate said articles.

Yet another subject of the invention are formulations chosen among: paints, inks, varnishes, lacquers, enamels and coatings in general to protect, decorate and impregnate surfaces; said formulations comprising the base for coating materials of the invention in which the amount of the resin with respect to the solvent is higher than 45% by weight.

The solvents of general formula (I) according to the present invention schematically solve the following problems:
1) they represent a unique solvent for resins derived from rosin, in particular for both ROSIN MODIFIED ESTER RESINS and MALEIC RESINS. Currently there is no category of commercially available solvents capable of dissolving both types of resins at temperatures lower than 120 °C, or even lower than 100 °C with resin:solvent ratios of about 45-70:65-30% w/w;
2) they guarantee a higher mass percentage of the resin in the paint, lower production times and temperatures of the above-mentioned resins;
3) they are in accordance with the current rules which require the replacement of fossil origin chemical products with those deriving from natural renewable sources, since they significantly reduce the environmental impact related to the use of the mineral solvents in the production of paints, which are the subject of this invention.

Further subjects of the invention will be apparent from the detailed description of the invention.

### Detailed Description of The Invention

The compounds to be used as solvents according to the present invention have the following general formula: 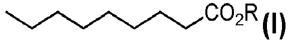 and are obtained by reaction of a C9 saturated fatty acid with a ROH alcohol.

The solvents of general formula (I) are typically esters of pelargonic acid, a C9 saturated fatty acid of possible vegetable origin, in which the group R is a straight or branched carbon chain, preferably with carbon atoms comprised between 3 and 8 (examples of synthesized esters in the present invention are: isopropyl pelargonate, *n*-butyl pelargonate, *n*-hexyl pelargonate, *sec*-octyl pelargonate, 2-ethylhexyl pelargonate).

The solvents described in this invention can be obtained by an esterification reaction of pelargonic acid with a (C1-C10),preferably (C3, C8) linear or branchedalcohol according to known methods [3]. The synthesis of esters of general formula (I) can be of two types: direct esterification and trans-esterification. In the first case the pelargonic acid is reacted with the desired alcohol, in a ratio of 1:1.5 by weight, for 2 hours in the appropriate solvent (generally toluene) at the reflux temperature of the same solvent, and sulphuric acid is added as catalyst at 1% by weight. In the second case (trans-esterification), the methylpelargonate and the desired alcohol are reacted, in a ratio of 1:1.5 by weight, for 2 hours in the appropriate solvent (generally toluene) at the reflux temperature of the same solvent, and sulphuric acid is added as catalyst at 1%w/w.

Pelargonic acid can also be obtained from a renewable raw material such as oleic acid. In fact, it is a by-product of the synthesis of azelaic acid from oleic acid by oxidation with ozone or hydrogen peroxide [4].

It has been surprisingly found that the esters of pelargonic acid described above are excellent solvents for the resins derived from rosin described in the present invention, in particular those belonging both to the family of ROSIN MODIFIED ESTER RESINS (for example, K16 supplied by the company Yser) and to the family of MALEIC RESINS (for example Perseus 1 supplied by the company Yser).

Such solvents allow resin dissolutions even of 60% or more by mass of resin, contrary to values not higher than 45% of the conventional solvents of mineral origin D100/D120/D140, mixtures of C12-C20 linear and branched alkanes supplied by Exxon (where 100, 120 and 140 are the respective flash point in °C) or of vegetable origin 2-ethylhexyl esters of C12-C18 fatty acids, RADIA 7129 supplied by OLEOGEN.

Mineral spirits, soybean oil, rapeseed oil, linseed oil, methyl ester of lauric acid, ester compounds of fatty acids with chains different from C9 (as, for example, C12) or esters obtained by the combination of fatty acids with polyhydric alcohols (differently from those of the present invention, that are monohydric alcohols, are much less solving with respect to the compounds of general formula (I), since they involve dissolution temperatures of about 180-200 °C.

Contrary to the teachings of the prior art, it is possible to obtain the formulation of a base for coating materials according to the invention with a process that comprises the steps of: mixing the resin in an amount greater than 45% or more, preferably between 45 and 75%, more preferably 55-70%,in a solvent obtained by the reaction of an ROH alcohol with an C9 chain acid, typically pelargonic acid, at a temperature lower than 100 °C, and preferably between 80-90 °C, for a time sufficient to solubilize the resin, typically a time shorter than 2 hours, preferably of about 15-60 minutes. Preferably, the solvent is of general formula (I).

The base for coating materials obtained is a clear solution consisting of one or more products obtained from the reaction of a C9 acid, typically pelargonic acid, and a ROH alcohol, in a quantity lower than 55% w/w, preferably between 55 and 35%, more preferably between 40 and 30% or lower, and rosin in a quantity higher than 45% w/w or more, preferably between>45 and 75%, more preferably 55-65% and 60-70%. Typically, the product of the reaction of the C9 acid and of the ROH alcohol consists of one or more compounds of general formula (I), optionally also in the presence of corresponding reagents.

The resin is a resin derived from rosin, in particular a resin belonging to the family of ROSIN MODIFIED ESTER RESINS and/or to the family of MALEIC RESINS.

The base for coating materials can be used as such as a surface protective coating or can be used for preparing inks, with the addition of a pigment (and other additives), which may contain other components in addition to esters of general formula (I); examples of other components have been mentioned previously, and anyway they are known by a person skilled in the art.

The base for coating materials as such, or mixed with other components, may be used for preparing products for surface coating and for inks. The base for coating materialsof the invention, paints and inks containing it can be applied with known methods, for example by a process of offset printing, gravure printing, silk screening, coldset, pad printing on paper, cardboard, ceramics, wood, tinplate, plastic filmssubstrates, or coatings materials can be used to protectsaid articles by applying them by impregnation, roller, brush, spray application.

The invention described herein offers four fundamental advantages compared to the state of the art:
1. shorter dissolution times due to the higher solvent power of the solvents prepared by us: up to 4 hours for known solvents and up to 30 minutes for solvents proposed in this invention,
2. lower working temperatures, up to 120 °C for traditional solvents and up to 80 °C for solvents proposedin this invention, which together with the advantages of point 1 determine a lower waste of energy for the production of paints based on modified rosin ester resins and maleic resins,
3. paints with a higher percentage of resin (even up to 70% w/w or higher). This aspect offers applications in fields not yet considered, as for example the production of paints for the sector of wood, ceramics, tinplate, fiberglass, metal surface coating,
4. improvement of the eco-toxicological profile compared to solvents derived from mineral oils.

The following examples are given by way of illustration of the inventiononly and are not to be considered as limiting the scope thereof.

### Examples

### Example 1. Synthesis of methyl pelargonate by direct esterification of pelargonic acid

The esterification procedure involves the reaction between a R-COOH acid and a R-OH alcohol, (C9) pelargonic acid was used as acidic moiety and methanol was used as alcohol with the following molar ratio 1:1.2 referred to the acid used.

As a catalyst to perform the reaction, 95-98% sulphuric acid H₂SO₄ was used in a ratio of 1:100 by volume relative to the alcohol used.

The reaction mixture is reacted at reflux in toluene for 2 hrs.

The final product is a liquid and does not require any further purification prior to use.

### Example 2. Synthesis of esters with C2-C8 alcohols for trans-esterification by methylpelargonate

The procedure of trans-esterification involves the reaction between an R-COOR acid ester and a R-OH alcohol, methyl ester of pelargonic acid (C9OMe) was usedas starting ester, the following were usedas alcohol:

| | | |
|---|---|---|
| - 2-propanol | CAS: 67-63-0 | reflux temperature 82 °C |
| - 1-n-butanol | CAS: 71-36-3 | reflux temperature 116-118 °C |
| - 1-n-hexanol | CAS: 111-27-3 | reflux temperature 156-157 °C |
| - 2-n-octanol | CAS: 123-96-6 | reflux temperature 174-181 °C |
| - 2-ethylhexanol | CAS: 104-76-7 | reflux temperature 183-186°C |

The alcohol was added to the starting ester in a molar ratio of 1:1, the catalyst was added in a ratio of 1:100 by volume relative to the alcohol used.

The reaction mixture is reacted at the reflux temperature of the alcohol used for 4 hrs for the 2-propanol and 1-n-butanol alcohols, other alcohols having a greater molecular weight for 24 hrs.

The products obtained are:
PAOiPrisopropyl pelargonate CH₃(CH₂)₇C(O)OCH(CH₃)₂
PAOBubutylpelargonate CH₃(CH₂)₇C(O)O(CH₂)₃CH₃
PAOEshexylpelargonate CH₃(CH₂)₇C(O)O(CH₂)₅CH₃
PAOOtoctylpelargonate CH₃(CH₂)₇C(O)O(CH₂)₇CH₃
PAOEtEs 2-ethyl-hexyl pelargonate CH₃(CH₂)₇C(O)OCH(CH₂)₂(CH₂)₂CH₃

### Example 3. Synthesis of esters with C2-C8 alcohols for esterification of hexanoic acid (C6, caproic acid)

The esterification procedure involves the reaction of caproic acid (CH₃(CH₂)₄C(O)OH) and a R-OH alcohol, as alcohols the following were used:

| | | |
|---|---|---|
| - 2-propanol | CAS: 67-63-0 | reflux temperature 82 °C |
| - 1-n-butanol | CAS: 71-36-3 | reflux temperature 116-118 °C |
| - 1-n-hexanol | CAS: 111-27-3 | reflux temperature 156-157 °C |
| - 2-n-octanol | CAS: 123-96-6 | reflux temperature 174-181 °C |
| - 2-ethylhexanol | CAS: 104-76-7 | reflux temperature 183-186°C |

The esterification procedure involves the reaction of hexanoic acid and R-OH alcohol, chosen among the foregoing ones, with the following in a molar ratio of 1:1.2 relative to the acid used.

As a catalyst to perform the reaction, 95-98% sulphuric acid H₂SO₄ was used in a ratio of 1:100 by volume relative to the alcohol used.

The reaction mixture is reacted at reflux in toluene for 2 hrs.

At the end of the reaction, toluene is removed by distillation.

The products obtained are:
CAOiPrisopropyl caproate CH₃(CH₂)₄C(O)OCH(CH₃)₂
CAOBu butyl caproate CH₃(CH₂)₄C(O)O(CH₂)₃CH₃
CAOEsehexyl caproate CH₃(CH₂)₄C(O)O(CH₂)₅CH₃
CAOOtoctyl caproate CH₃(CH₂)₄C(O)O(CH₂)₇CH₃
CAOEtEs 2-ethyl-hexyl caproate CH₃(CH₂)₄C(O)OCH(CH₂)₂(CH₂)₂CH₃

The final products are liquid and do not require any further purification prior to use.

### Example 4. Synthesis of esters with C2-C8 alcohols for esterification of dodecanoic acid (C12, lauric acid)

The esterification procedure involves the reaction of lauric acid (CH₃(CH₂)₁₀C(O)OH) and a R-OH alcohol, the following were usedas alcohols:

| | | |
|---|---|---|
| - 2-propanol | CAS: 67-63-0 | reflux temperature 82 °C |
| - 1-n-butanol | CAS: 71-36-3 | reflux temperature 116-118 °C |
| - 1-n-hexanol | CAS: 111-27-3 | reflux temperature 156-157 °C |
| - 2-n-octanol | CAS: 123-96-6 | reflux temperature 174-181 °C |
| - 2-ethylhexanol | CAS: 104-76-7 | reflux temperature 183-186°C |

The esterification procedure involves the reaction of dodecanoic acid and R-OH alcohol, chosen among the foregoing ones, with the following in a molar ratio of 1:1.2 relative to the acid used.

As a catalyst to perform the reaction, 95-98% sulphuric acid H₂SO₄ was used in a ratio of 1:100 by volume relative to the alcohol used.

The reaction mixture is reacted at reflux in toluene for 2 hrs.

At the end of the reaction, toluene is removed by distillation.

The products obtained are:
LAOiPrisopropyl laurate CH₃(CH₂)₁₀C(O)OCH(CH₃)₂
LAOBubutyl laurate CH₃(CH₂)₁₀C(O)O(CH₂)₃CH₃
LAOEshexyl laurate CH₃(CH₂)₁₀C(O)O(CH₂)₅CH₃
LAOOtoctyl laurate CH₃(CH₂)₁₀C(O)O(CH₂)₇CH₃
LAOEtEs 2-ethyl-hexyl laurate CH₃(CH₂)₁₀C(O)OCH(CH₂)₂(CH₂)₂CH₃

The final products are liquid and do not require any further purification prior to use.

### Example 5. Preparation of the base for coating materials.

The formulation of the base for coating materials was: 50/55% w/w commercial resin, modified rosin phenolic or maleic resin dissolved in a 45/50% solvent.

Three commercial solvents (D100, mineral oil; 7129, 2-ethylhexyl palmitate; PARYOL TMC 810T, caprylic/capric triglyceride) and the solvents described in examples 1-4 were used. The resins of Example 1 and the chosen solvent were placed on a heating plate under magnetic stirring at 80 °C for one hour, and then allowed to cool to ambient temperature for 24 hrs. Tables 1 and 2 show the times when the solution becomes clear and no deposit is found.

**Table 1. ROSIN MODIFIED ESTER RESIN BASED PAINTS**

| **Solvent** | **Origin** | **45% resin (dissolution time at 80 °C, min)** | **55% resin (dissolution time at 80 °C, min)** |
|---|---|---|---|
| D100Mineral Oil CAS: Reg. No. 64742-47-8 | Commercial | >60 | A clear solution is not obtained after 2 hrs |
| CAOiPrisopropylcaproate CH₃(CH₂)₄C(O)OCH(CH₃)₂ | Example 3 | >60 | A clear solution is not obtained after 2 hrs |
| CAOBubutylcaproate CH₃(CH₂)₄C(O)O(CH₂)₃CH₃ | Example 3 | >60 | A clear solution is not obtained after 2 hrs |
| CAOEshexylcaproate CH₃(CH₂)₄C(O)O(CH₂)₅CH₃ | Example 3 | >60 | A clear solution is not obtained after 2 hrs |
| CAOOtoctylcaproate CH₃(CH₂)₄C(O)O(CH₂)₇CH₃ | Example 3 | >60 | A clear solution is not obtained after 2 hrs |
| CAOEtEs2-ethyl-hexyl caproate CH₃(CH₂)₄C(O)OCH(CH₂)₂(CH₂)₂CH₃ | Example 3 | >60 | A clear solution is not obtained after 2 hrs |
| PAOMemethylpelargonate CH₃(CH₂)₇C(O)OCH₃ | Example 1 | 15 | 16 |
| PAOiPrisopropylpelargonate CH₃(CH₂)₇C(O)OCH(CH₃)₂ | Example 2 | 13 | 15 |
| PAOBun-butylpelargonate CH₃(CH₂)₇C(O)O(CH₂)₃CH₃ | Example 2 | 13 | 14 |
| PAOEtEs2-ethylhexyl pelargonate CH₃(CH₂)₇C(O)OCH(CH₂)₂(CH₂)₂CH₃ | Example 2 | 50 | Clear solution |
| LAOiPrisopropyllaurate CH₃(CH₂)₁₀C(O)OCH(CH₃)₂ | Example 4 | >60 | A clear solution is not obtained after 2 hrs |
| LAOBubutyllaurate CH₃(CH₂)₁₀C(O)O(CH₂)₃CH₃ | Example 4 | >60 | A clear solution is not obtained after 2 hrs |
| LAOEshexyllaurate CH₃(CH₂)₁₀C(O)O(CH₂)₅CH₃ | Example 4 | >60 | A clear solution is not obtained after 2 hrs |
| LAOOtoctyllaurate CH₃(CH₂)₁₀C(O)O(CH₂)₇CH₃ | Example 4 | >60 | A clear solution is not obtained after 2 hrs |
| LAOEtEs2-ethylhexyl laurate CH₃(CH₂)₁₀C(O)OCH(CH₂)₂(CH₂)₂CH₃ | Example 4 | >60 | A clear solution is not obtained after 2 hrs |
| 71292ethylhexyl palmitate CH₃(CH₂)₁₂C(O)OCH(CH₂)₂(CH₂)₂CH₃ | Commercial | >60 | A clear solution is not obtained after 2 hrs |
| CAS: Reg. No. 29806-73-3 | | | |
| PARYOL TMC 810T caprilic/capric triglyceride | Commercial | >60 | A clear solution is not obtained after 2 hrs |
| CAS: Reg. No. 73398-61-5 | | | |

**Table 2. MALEIC RESIN BASED PAINTS**

| **Solvent** | **Origin** | **45% resin (dissolution time at 80 °C, min)** | **55% resin (dissolution time at 80 °C, min)** |
|---|---|---|---|
| D100 | Mineral | >120 | A clear solution is not obtained after 2 hrs |
| Mineral oil | | | |
| CAS: Reg. No. 64742-47-8 | | | |
| 7129 | Vegetable | >240 | A clear solution is not obtained after 4 hrs |
| 2-ethylhexyl palmitate | | | |
| CAS: Reg. No. 29806-73-3 | | | |
| CAOiPrisopropylcaproate CH₃(CH₂)₄C(O)OCH(CH₃)₂ | Example 3 | >60 | A clear solution is not obtained after 4 hrs |
| CAOBubutylcaproate CH₃(CH₂)₄C(O)O(CH₂)₃CH₃ | Example 3 | >60 | A clear solution is not obtained after 4 hrs |
| CAOEshexylcaproate CH₃(CH₂)₄C(O)O(CH₂)₅CH₃ | Example 3 | >60 | A clear solution is not obtained after 4 hrs |
| CAOOtoctylcaproate CH₃(CH₂)₄C(O)O(CH₂)₇CH₃ | Example 3 | >60 | A clear solution is not obtained after 4 hrs |
| LAOEtEs2-ethylhexyl caproate CH₃(CH₂)₄C(O)OCH(CH₂)₂(CH₂)₂CH₃ | Example 3 | >60 | A clear solution is not obtained after 4 hrs |
| PAOMemethylpelargonate CH₃(CH₂)₇C(O)OCH₃ | Vegetable (this invention) | 10 | 15 |
| PAOiPrisopropylpelargonate CH₃(CH₂)₇C(O)OCH(CH₃)₂ | Vegetable (this invention) | 10 | 15 |
| PAOBun-butylpelargonate CH₃(CH₂)₇C(O)O(CH₂)₃CH₃ | Vegetable (this invention) | 15 | 20 |
| PAOEtEs2-ethylhexyl pelargonate CH₃(CH₂)₇C(O)OCH(CH₂)₂(CH₂)₂CH₃ | Example 2 | 60 | Clear solution |
| LAOiPrisopropyllaurate CH₃(CH₂)₁₀C(O)OCH(CH₃)₂ | Example 4 | >60 | A clear solution is not obtained after 2 hrs |
| LAOBubutyllaurate CH₃(CH₂)₁₀C(O)O(CH₂)₃CH₃ | Example 4 | >60 | A clear solution is not obtained after 2 hrs |
| LAOEshexyllaurate CH₃(CH₂)₁₀C(O)O(CH₂)₅CH₃ | Example 4 | >60 | A clear solution is not obtained after 2 hrs |
| LAOOtoctyllaurate CH₃(CH₂)₁₀C(O)O(CH₂)₇CH₃ | Example 4 | >60 | A clear solution is not obtained after 2 hrs |
| LAOEtEs2-ethylhexyl laurate CH₃(CH₂)₁₀C(O)OCH(CH₂)₂(CH₂)₂CH₃ | Example 4 | >60 | A clear solution is not obtained after 2 hrs |
| 71292 ethylhexyl palmitate CH₃(CH₂)₁₂C(O)OCH(CH₂)₂(CH₂)₂CH₃ CAS: Reg. No. 29806-73-3 | Commercial | >60 | A clear solution is not obtained after 2 hrs |
| PARYOL TMC 810T caprilic/capric triglyceride CAS: Reg. No. 73398-61-5 | Commercial | 80 | Clear solution after 4 hrs |

From the data of Tables 1 and 2, it can be seen that the solvents commercially available at present (mineral oil, palmitic acid ester, triglyceride) show low performance in the solubilization of resins. It is confirmed that the best commercial solvent is triglyceride, but with very long dissolution times. On the other hand, also esters of fatty acids other than palmitic acid, such as lauric acid (C12) or capric acid (C6) cannot be used. Surprisingly, the solvents related to the present invention, derived from pelargonic acid (C9), have shown immediately a very high solvent power. Actually, the resin dissolution using common commercially available mineral or vegetable solvents generally requires at least one hour under the same conditions. With the solvents of this invention, the complete dissolution is performed in just 15 minutes, thus a quarter of the time relative to the dissolution procedure with commercially available vegetable or mineral solvents.

The use of the solvents of the present invention allows the formulation of bases for coating materials with a high content of resin up to 55/60% w/w to allow their application as such not only in the field of paints and printing inks, but also in the field of surface coating of wood, ceramics and tinplate, where better properties of gloss, drying and surface resistance are required.

### Example 6. Solvent power of pelargonic acid esters

A first assessment of the higher solvent power of pelargonic acid esters with respect to the classical solvents can be performed by means of the analysis of the data obtained with the dynamic light scattering technique (SMD 6000 Laser Quantum apparatus,50 mW source of light beam at 532.5 nm) carried out on the solution at 5% by weight of modified phenolic (Table 3) and Maleic (Table 4)Resin, solubilized with traditional mineral solvents (base mineral oilD100), traditional vegetal oil (RADIA 7129) and the solvents of the present invention. The DLS technique (*Dynamic Light Scattering*) allows to monitor the intensity depending on time of the light scattered by an object into a solution. The speed of fluctuation of the light intensity depends on the speed with which the element capable of generating such scattering moves into a solution; the latter is described by the diffusion coefficient D, which is related to the size of the particles into the solution, in particular to the hydrodynamic radius R_{I} of a ball moving in a solvent having a viscosity η, according to the Stokes-Einstein equation: $D = \frac{kT}{6 {πηR}_{i}}$ where k is the Boltzmann constant and T is the temperature.

The measurements of the dynamic light scattering allowed to evaluate the capacity of different solvents, used to disperse the two resins, to generate sub-micrometric aggregates: K16 and a maleic resin. This dispersion capacity is linked to the solvent capacity of individual substances. The lower is the size of aggregates, the better is the solvent power for the solute concerned. In the case of the present invention, the solvent consists of the compounds of general formula (I) and solutes are modified PHENOLIC RESINS and MALEIC RESINS. In this case, the smaller is the hydrodynamic radius, better is the solvation degree of the resin by the solvent, which is therefore better than solvents giving a lower solvation degree, and therefore a larger hydrodynamic radius relative to the same resins. The hydrodynamic radii found by DLS for the solvents used by us are the lowest compared to the other commercially available solventsstudied. The high solvent power, therefore confirmed by the hydrodynamic radius, has a huge impact on the paint final properties and on the production mode. The final properties are affected by the fact that the higher solvent power of our compounds allows to dissolve the rosin and maleic resins up to 70% by weight, and therefore allow to produce paints having a high degree of gloss and very high surface resistance, since these latter properties depend on the amount of resin that a solvent can dissolve to form a paint. In addition, the production mode of the paint was performed at 80°C instead of 200°C because our compounds are more solvent with respect to the commercially available ones and need a lower operating temperature in order to dissolve completely and appropriately the resins concerned.

A first assessment was of visual type, where clear solutions were obtained after treatment, and after that a measurement of the DLS was carried out to assess their dispersion. Actually, in samples having a good resin dispersion, which are clear, particles with sub-micrometric size (2-300 nm) are obtained; sizes are associated with the presence of more or less large aggregates. In the extreme cases of precipitation phenomena (> 1000 nm), the sample appears cloudy, and this is associated with a very poor resin dispersion.

In our case, from the data shown in Tables 1 and 2 of Example 3 it can be clearly seen that the diffusion coefficient for the solvents of the invention, and therefore the size of the aggregates, is considerably lower than in solvents commercially available at present for dispersing modified phenolic resins and maleic resins. Actually, for D100 and RADIA 7129 solvents, aggregate sizes exceeding the limit of detectability by DLS are obtained, and therefore it can be deduced that they disperse in a poorer way such resins relative to solvents of the present invention. A 5% w/w modified synthetic phenolic resin was used for the mixtures to be tested by DLS obtained industrially by esterification of rosin with pentaerythritol, and subsequent polymerization with phenol, trade name SIRIUS XVI, supplied by YSER. The Maleic Resin used is Perseus I supplied by Yser.

**Table 3. ROSIN MODIFIED ESTER RESIN**

| **Sample** | **Origin** | **Diffusion coefficient (cm²/sec)** | **Polydispersity index** | **Hydrodynamic radius (nm)** |
|---|---|---|---|---|
| D100 mineral oil CAS: Req. No. 64742-47-8 | Commercial | - | - | - |
| 7129 2-ethylhexyl palmitate CAS: Reg. No. 29806-73-3 | Commercial | - | - | - |
| PAOMe methylpelargonate CH₃(CH₂)₇C(O)OCH₃ | Example 1 | (2.4 ± 0.3)10⁻⁸ | 0.76±0.11 | 8.9 ± 0.9 |
| PAOiPr isopropylpelargonate CH₃(CH₂)₇C(O)OCH(CH₃)₂ | Example 2 | (2.4 ± 0.4)10⁻⁸ | 0.64±0.14 | 9.2 ± 1.3 |
| PAOBu n-butylpelargonate CH₃(CH₂)₇C(O)O(CH₂)₃CH₃ | Example 2 | (1.69 ± 0.11)10⁻⁸ | 0.71±0.06 | 12.9 ± 0.4 |

**Table 4. MALEIC RESIN**

| **Sample** | **Origin** | **Diffusion coefficient (cm²/sec)** | **Polydispersity index** | **Hydrodynamic radius (nm)** |
|---|---|---|---|---|
| D100 Mineral oil CAS: Req. No. 64742-47-8 | Commercial | - | - | - |
| 7129 2-ethylhexyl palmitate CAS: Req. No. 29806-73-3 | Commercial | - | - | - |
| PAOMe methylpelargonate CH₃(CH₂)₇C(O)OCH₃ | Example 1 | (1.4± 0.1)10⁻⁷ | 0.90±0.42 | 1.7±0.6 |
| PAOiPr isopropylpelargonate CH₃(CH₂)₇C(O)OCH(CH₃)₂ | Example 2 | (7.95±0.17)10⁻⁸ | 1.0±0.3 | 2.74±0.11 |
| PAOBu n-butylpelargonate CH₃(CH₂)₇C(O)O(CH₂)₃CH₃ | Example 2 | (93.3±0.3)10⁻⁸ | 0.70±0.06 | 2.34 ± 0.8 |

From a first analysis of Tables 3 and 4, it can be seen that in the case of the solvents commercially available at present in dissolution conditions (80 °C for 1 hour) neither a diffusion coefficient nor the hydrodynamic radius (measured by means of the laser light scattering technique, DLS) of the populations present in the dispersion cannot be defined. The impossibility to determine these parameters reflects the absence of suitably solvated resin agglomerates, which indicates a precise and lower solvent power of products currently in use if compared with the solvents of the present invention. It follows that with the latter, production times and temperatures are reduced, and the product quality is improved because it has greater stability over time and a more effective application profile in printing and coating.

### Example 7 Production of offset printing ink

10 kg, i.e. 2.5 kg for each colour in the YMCK four-colour standard (yellow, magenta, cyan, black) of offset printing ink were prepared using the paint of Example 5 described in our invention, according to the following formula:

| | |
|---|---|
| Sunbrite Yellow 13 pigment for yellow; | |
| Sunbrite Red 57:1 pigment for magenta; | |
| Sunbrite Blue pigment 15:3 for cyan; | |
| Sunbrite Black 7 pigment for black; Sunchemical | 20% |
| Example 5 paint base | 60% |
| WorleéKyd S23 alkyd resin | 10% |
| Micro Powder Mp 22 vf hydrocarbon wax | 5% |
| Hydroquinone | 1% |
| Mn(octanoate)₂ | 2% |
| Soybean oil | 2% |

The mixture was stirred under a Cowles disperder for 30 minutes, thereafter it was refined on three-cylinder machine until obtaining pigment particles smaller than 10 microns (assay carried out with BYK-Gardner grindometer).

The inks thus obtained were tested by analyses of viscosity, yield value, tensile strength, surface resistance and setoff drying.

The results obtained are as follows:
Theoretical background
Viscosity, tensile strength and yield value (pour point) are important parameters to understand the behaviour of the printing ink in the printing machine. Typically (see Printing Ink Manual, Springer, 1988), ranges for inks suitable for printing are:
   viscosity: 200-350 poise (Laray viscometer, falling bar, processing with Casson equation)
   yield value: 10000-15000 dy/cm²(Laray viscometer, falling bar, processing with Casson equation)
   tensile strength: 13-18 (inkometer 1100, Rycobel Group).

Rub off is an important post printing test to perform always to assess the adhesion properties of the ink to the substrate and the surface resistance to scratches and cutting of the final printed matter. Printed ink undergoes rubbing with a constant weight for a known time to check the surface resistance of the final product. If the printed matter results scratched, then in test is positive, meaning that rub off resulted, and thus the ink is not suitable for printing.

Setting is a further post-printing parameter of fundamental importance for understanding the ink drying power on the substrate, in order to prevent the phenomenon of setting off that could lead to a contamination of the entire pile of sheets output from the printer. Apart from contaminating the pile of sheets, it makes the final printing result graphically unacceptable, since part of the ink is transferred from the printed face to the non-printed face of the top sheet in the pile. Printed ink undergoesa constant pressure from a printing machine that carries a blank sheet that will be put in contact with the printed sheet (setting off test). This setting off test will assess the portion of ink that is transferred by pressure from the printed sheet on the blank sheet pressed against the printed sheet always with the same pressure, but at subsequent intervals (in our case, 10", 30", 60", 90", 120"). After 120", if setting off is still present, the ink is still drying, and the test is negative, i.e. ink does not dry superficially and may not be suitable for printing.

### Yellow ink:

Viscosity: 220±20 poise (Laray viscometer, falling bar, processing with Casson equation).
Yield value: 12200±1000 dy/cm² (Laray viscometer, falling bar, processing with Casson equation).
Tensile strength: 15 (ink o meter 1100, Rycobel Group).
Rubbing off: negative, printed ink resists to rubbing test (Sutherland ink rub tester, weight: 2 lb, 30 cycles, 21 cycles per minute).
Setting off: positive after 2 minutes, ink dries superficially during the test, (IGT ink setting testing machine).

### Red ink:

Viscosity: 250±20 poise (Laray viscometer, falling bar, processing with Casson equation).
Yield value: 13300±15000 dy/cm² (Laray viscometer, falling bar, processing with Casson equation).
Tensile strength: 16 (ink o meter 1100, Rycobel Group).
Rubbing off: negative, printed ink resists to rubbing test (Sutherland ink rub tester, weight: 2 lb, 30 cycles, 21 cycles per minute).
Setting off: positive after 2 minutes, ink dries superficially during the test, (IGT ink setting testing machine).

### Blue ink:

Viscosity: 260±20 poise (Laray viscometer, falling bar, processing with Casson equation).
Yield value: 13800±15000 dy/cm² (Laray viscometer, falling bar, processing with Casson equation).
Tensile strength: 16 (ink o meter 1100, Rycobel Group).
Rubbing off: negative, the printed ink resists to rubbing test (Sutherland ink rub tester, weight: 2 lb, 30 cycles, 21 cycles per minute).
Setting off: positive after 2 minutes, ink dries superficially during the test, (IGT ink setting testing machine).

### Black ink:

Viscosity: 240±20 poise (Laray viscometer, falling bar, processing with Casson equation).
Yield value: 13500±15000 dy/cm² (Laray viscometer, falling bar, processing with Casson equation).
Tensile strength: 16 (ink-o-meter 1100, Rycobel Group).
Rubbing off: negative, the printed ink resists to rubbing test (Sutherland ink rub tester, weight: 2 lb, 30 cycles, 21 cycles per minute).
Setting off: positive after 2 minutes, ink dries superficially during the test, (IGT Ink setting testing machine).

Inks thus obtained were printed on the industrial offset printing machine KBA Rapida 106, for a full cycle of printing of 8 hours at a speed of 10,000 sheets per hour. The ink did not show any printing problems at graphic level, nor any issues of emulsion properties with the wetting mixture present on the printing machine. Thus, the outcome of printing is positive. The final printed matter underwent rub off and setting tests with negative results for the first and positive for the second. Also, the post printing tests shall therefore be considered positive.

The goodness of the test print and post printing parameters of inks produced with the paint of Example 5 of our invention demonstrate that our solvents are applicable as products to be used for the formulation of rosin and maleic based paints and for the production of offset printing inks.

### Bibliography

[1] https://www.ncbi.nlm.nih.gov/pubmed/17992002, J Oleo Sci., RoyAS,BhattacharjeeM,MondaIR,Ghosh S.,2007;56(12):623-8.
[2] "The Printing Ink Manual V edition", R.J. Pierce, 2008, Springer
[3] L. D. Metcalfe,A. A. Schmitz,J. R. Pelka, Anal. Chem.,1966,38(3), pp 514-515
[4] Sustainable Process for Production of Azelaic Acid Through Oxidative Cleavage of Oleic Acid, V. Benessere, F. Ruffo, R. Esposito, A. de Santis, JAOCS, 92 (2015) 1701-1707

## Claims

1. Use as a solvent of a compound which is obtained by esterification reaction between a C9 fatty acid and C1-C10 straight or branched chain alcohols in formulations selected from paints, printing inks, surface coatings, varnishes, lacquers, enamels and coatings in general, wherein said formulations comprise a resin derived from rosin selected from those belonging either to the family of ROSIN MODIFIED ESTER RESINS or to the family of MALEIC RESINS and mixtures thereof, in an amount higher than 45% by weight.

2. Use according to the preceding claim, in which the compound to be used as solvent is selected from the compounds having the following general formula: 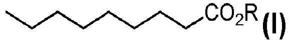 in which R is a linear or branched chain of carbon atoms, carbon atoms ranging between 1 and 10, preferably between 3 and 8, particularly preferred are: methyl pelargonate, isopropylpelargonate, n-butyl pelargonate, n-hexyl pelargonate, sec-octylpelargonate, 2-ethylhexyl pelargonate, and mixtures thereof.

3. Formulations for printing inks, paints, varnishes, lacquers, enamels, and coatings comprising a resin derived from rosin and a solvent that is obtained by esterification reaction between a C9 fatty acid and C1-C10 straight or branched chain alcohols in which the resin is contained in an amount higher than 45% w/w with respect to the solvent, preferably in an amount ranging between 45% and 70% w/w.

4. Formulations according to claim 3, wherein the printing inks are chosen between offset printing inks, either for application on a non-food packaging medium or for application on an absorbing - such as mono-coated cardboard - and non-absorbing food packaging - such as bi-coatedcardboard - medium, heatset, coldset, paints and coatings, and are clear or coloured for natural or synthetic surfaces selected from wood, ceramics, paper, cardboard and tinplate.

5. Manufacturing process for printing inks, paints, lacquers, enamels, coatings and varnishes comprising the step of mixing at a temperature lower than 100 °C, preferably between 80 °C and 90 °C, for a time shorter than 1 hour, preferably between 30 and 45 minutes, a resin derived from rosin with a solvent obtained by esterification reaction between a C9 fatty acid and C1-C10 straight or branched chain alcohols, whose ratio resin/solvent is higher than 45% by weight.

6. Base for coating materials that is a clear solution consisting of:
(i) a solvent that is the reaction product between a C9 saturated fatty acid and ROH alcohols, wherein the group R is linear or branched with carbon atoms ranging between 1 and 10, and
(ii) a resin derived from rosin, selected from those belonging either to the family of ROSIN MODIFIED ESTER RESINSor to the family of MALEIC RESINS, and mixtures thereof,
wherein the amount of the resin (ii) relative to the solvent (i) is higher than 45% by weight, preferably between >45 and 75% by weight, more preferably 55-65% and 60-70% by weight.

7. Base for coating materials according to claim 6, wherein the ratio resin:solvent is 45-70:65-30% w/w.

8. Manufacturing process of the base for coating materials according to any one of claims 6-7, wherein the mixing of the resin (ii) with the solvent (i) is carried out at a temperature lower than 100 °C, preferably between 80 °C and 90 °C, for a time shorter than 1 hour, preferably between 15 and 60 minutes, more preferably between 30 and 45 minutes.

9. Use of the base for coating materials according to any one of claims 6-7, for the preparation of varnishes, paints, lacquers, enamels, coatings and printing inks.

10. Use of the base for coating materials according to any one of claims 6-7, as such or mixed with other components to prepare varnishes, paints, lacquers, enamels and inks to be applied on substrates such as coating, or as impregnating material for articles.

11. Formulations selected from inks, paints, lacquers, enamels, coatings and varnishes comprising the base according to any of the preceding claims 6-7, wherein the quantity of the resin (ii) relative to the solvent (i) is higher than 45% by weight.

12. Impregnated or superficially coated articles with the base for coating materials according to any one of claims 6-7 or with the formulations according to claim 11.

## Patentansprüche

1. Verwendung als Lösungsmittel einer Verbindung, die durch Veresterungsreaktion zwischen einer C9-Fettsäure und geradkettigen oder verzweigten C1-C10-Alkoholen in Formulierungen erhalten wird, die ausgewählt sind aus Farben, Druckfarben, Oberflächenbeschichtungen, Lacken, Emails und Beschichtungen im Allgemeinen, wobei die Formulierungen umfassen ein Harz, das von Kolophonium abgeleitet ist, ausgewählt aus solchen, die entweder zur Familie der KOLOPHONIUM-MODIFIZIERTEN ESTERHARZE oder zur Familie der MALEISCHEN HARZE und Gemische davon gehören, in einer Menge von mehr als 45 Gew.-%.

2. Verwendung gemäß dem vorhergehenden Anspruch, wobei die als Lösungsmittel zu verwendende Verbindung aus den Verbindungen mit der folgenden allgemeinen Formel ausgewählt ist: 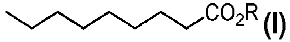 wo R eine lineare oder verzweigte Kette von Kohlenstoffatomen ist, wobei die Kohlenstoffatomen im Bereich zwischen 1 und 10, vorzugsweise zwischen 3 und 8, enthalten sind, und die besonders bevorzugt sind: Methylpelargonate, Isopropylpelargonate, *n*-ButylPelargonate, *n*-Hexyl-Pelargonate, Sec-octylpelargonate, 2-Ethylhexyl-Pelargonate, und Mischungen davon.

3. Formulierungen für Druckfarben, Farben, Lacke, Emails und Beschichtungen die einen Harz aus Kolophonium und ein Lösungsmittel umfassen, das durch eine Veresterungsreaktion zwischen einer C9-Fettsäure und geradkettigen oder verzweigten C1-C10 Alkoholen erhalten wird, in denen das Harz in einer Menge von mehr als 45 Gew.-% in Bezug auf das Lösungsmittel, vorzugsweise in einer Menge im Bereich zwischen 45% und 70 Gew.-%, enthalten ist.

4. Formulierungen nach Anspruch 3, wobei die Druckfarben zwischen Offsetdruckfarben gewählt werden, entweder für die Anwendung auf einem Nichtlebensmittelverpackungsmedium oder für die Anwendung auf einem absorbierenden - wie einfach beschichteten Karton - und nichtabsorbierenden Lebensmittelverpackungen - wie zweifach beschichteten Karton - Mittel, Heizungsgruppe, Kühlungsgruppe, Farben und Beschichtungen, die klar oder farbig für natürliche oder synthetische Oberflächen sind, die aus Holz, Keramik, Papier, Pappe und Weißblech ausgewählt sind.

5. Herstellungsverfahren von Druckfarben, Farben, Lacken, Emails, Beschichtungen und Lacken, umfassend den Schritt des Mischens bei einer Temperatur von weniger als 100°C, vorzugsweise zwischen 80°C und 90°C, für eine Zeit von weniger als 1 Stunde, vorzugsweise zwischen 30 und 45 Minuten, ein Harz, das von Kolophonium mit einem Lösungsmittel abgeleitet ist, das durch Veresterungsreaktion zwischen einer C9-Fettsäure und geradkettigen oder verzweigten C1-C10-Alkoholen erhalten wurde, deren Verhältnis Harz/Lösungsmittel höher als 45 Gew.-% ist.

6. Basis für Beschichtungsmaterialien, die eine klare Lösung ist, bestehend aus:
(i) ein Lösungsmittel, das das Reaktionsprodukt zwischen einer gesättigten C9-Fettsäure und ROH-Alkoholen ist, wobei die Gruppe R linear oder mit Kohlenstoffatomen im Bereich zwischen 1 und 10 verzweigt ist, und
(ii) ein von Kolophonium abgeleitetes Harz, ausgewählt aus jenen, die entweder zur Familie der KOLOPHONIUM-MODIFIZIERTEN ESTERHARZE oder zur Familie der MALEISCHEN HARZE gehören, und Gemische davon;
wobei die Menge des Harzes (ii) relativ zum Lösungsmittel (i) höher als 45 Gew.-% ist, vorzugsweise zwischen > 45 und 75 Gew.-% , bevorzugter 55 bis 65 Gew.-% und 60 bis 70 Gew.-%.

7. Basis für Beschichtungsmaterialien nach Anspruch 6, wobei das Verhältnis Harz:Lösungsmittel 45-70:65-30 Gew.-% beträgt.

8. Herstellungsverfahren der Basis für Beschichtungsmaterialien nach einem der Ansprüche 6 bis 7, wobei das Mischen des Harzes (ii) mit dem Lösungsmittel (i) bei einer Temperatur von weniger als 100°C, vorzugsweise zwischen 80°C und 90°C, für eine Zeit von weniger als 1 Stunde, vorzugsweise zwischen 15 und 60 Minuten, bevorzugter zwischen 30 und 45 Minuten, durchgeführt wird.

9. Verwendung der Basis für Beschichtungsmaterialien nach einem der Ansprüche 6-7, zur Herstellung von Lacken, Farben, Emails, Lacken und Druckfarben.

10. Verwendung der Basis für Beschichtungsmaterialien nach einem der Ansprüche 6 bis 7, als solche oder gemischt mit anderen Komponenten zur Herstellung von Farben, Lacken, Emails und Tinten zum Aufbringen auf Substrate wie Beschichtungs- oder Imprägnier-Materialien für Artikel.

11. Formulierungen, ausgewählt aus Tinten, Farben, Lacken, Emails, Beschichtungen und Lacken, umfassend die Basis nach einem der vorhergehenden Ansprüche 6 bis 7, wobei die Menge des Harzes (ii) relativ zum Lösungsmittel (i) um mehr als 45 Gew.-% höher ist.

12. Imprägnierte oder oberflächlich beschichtete Gegenstände mit der Basis für Beschichtungsmaterialien nach einem der Ansprüche 6 bis 7 oder mit den Formulierungen nach Anspruch 11.

## Revendications

1. Utilisation comme solvant d'un composé obtenu par réaction d'estérification entre un acide gras C9 et des alcools à chaîne droite ou ramifiée C1-C10 dans des formulations choisies parmi les peintures, les encres d'imprimerie, les revêtements de surface, les vernis, les laques, les émaux et les revêtements en général, dans laquelle lesdites formulations comprennent une résine dérivée de colophane choisie parmi celles appartenant soit à la famille des RÉSINES ESTER MODIFIÉES À LA COLOPHANE, soit à la famille des RÉSINES MALÉIQUES et leurs mélanges, en une quantité supérieure à 45 % en poids.

2. Utilisation selon la revendication précédente, dans laquelle le composé à utiliser comme solvant est choisi parmi les composés de formule générale suivante: 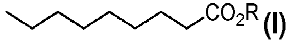 où R est une chaîne linéaire ou ramifiée d'atomes de carbone, des atomes de carbone variant entre 1 et 10, de préférence entre 3 et 8, desquels particulièrement préférés sont les suivants: méthyle pelargonate, isopropyle pelargonate, *n*- butyle pelargonate, *n*-hexyle pelargonate, sec-octyle pelargonate, 2-éthylhexyle pelargonate, et leurs mélanges.

3. Formulations pour des encres d'imprimerie, des peintures, des vernis, des laques, des émaux et des revêtements comprenant une résine dérivée de colophane et d'un solvant obtenu par réaction d'estérification entre un acide gras C9 et des alcools à chaîne droite ou ramifiée C1-C10 dans lequel la résine est contenue en une quantité supérieure à 45% en poids par rapport au solvant, de préférence en une quantité comprise entre 45% et 70% en poids.

4. Formulations selon la revendication 3, dans lesquelles les encres d'imprimerie sont choisis entre des encres d'imprimerie offset, soit pour une application sur un moyen support d'emballage non alimentaire ou pour l'application sur un emballage absorbant - tel qu'un carton mono-revêtu - et un emballage alimentaire non absorbant - tels qu'un carton bi-revêtu, un moyen, un groupe chauffant, un groupe refroidissant, des peintures et des revêtements, et sont transparents ou colorés pour des surfaces naturelles ou synthétiques choisies parmi le bois, la céramique, le papier, le carton et la plaque d'étain.

5. Procédé de fabrication d'encres d'imprimerie, des peintures, des laques, des émaux, des revêtements et des vernis comprenant l'étape de mélange à une température inférieure à 100°C, de préférence entre 80°C et 90°C, pendant une durée inférieure à 1 heure, de préférence entre 30 et 45 minutes, une résine dérivée de la colophane avec un solvant obtenu par réaction d'estérification entre un acide gras C9 et des alcools à chaîne droite ou ramifiée C1-C10, dont le rapport résine/solvant est supérieur à 45% en poids.

6. Base pour des matériaux de revêtement qui est une solution claire composée de:
(i) un solvant qui est le produit de la réaction entre un acide gras saturé C9 et des alcools ROH, dans lequel le groupe R est linéaire ou ramifié avec des atomes de carbone compris entre 1 et 10, et
(ii) une résine dérivée de la colophane, choisie parmi celles appartenant soit à la famille des RÉSINES ESTER MODIFIÉES À LA COLOPHANE, soit à la famille des RÉSINES MALÉIQUES, et leurs mélanges,
dans laquelle la quantité de résine (ii) par rapport au solvant (i) est supérieure à 45% en poids, de préférence entre > 45 et 75% en poids, plus préférablement 55-65% et 60-70% en poids.

7. Base pour des matériaux de revêtement selon la revendication 6, dans laquelle le rapport résine:solvant est 45-70:65-30% en poids.

8. Procédé de fabrication de la base pour les matériaux de revêtement selon l'une quelconque des revendications 6-7, dans lequel le mélange de la résine (ii) avec le solvant (i) est effectuée à une température inférieure à 100°C, de préférence entre 80°C et 90°C, pendant une durée inférieure à 1 heure, de préférence entre 15 et 60 minutes, mieux encore entre 30 et 45 minutes.

9. Utilisation de la base pour des matériaux de revêtement selon l'une quelconque des revendications 6 à 7, pour la préparation de vernis, peintures, laques, émaux, revêtements et encres d'imprimerie.

10. Utilisation de la base pour des matériaux de revêtement selon l'une quelconque des revendications 6 à 7, telle quelle ou mélangée avec d'autres composants pour préparer des vernis, peintures, laques, émaux et encres à appliquer sur des substrats tels qu'un revêtement ou comme un matériau d'imprégnation pour des articles.

11. Formulations choisies parmi les encres, peintures, laques, émaux, revêtements et vernis comprenant la base selon l'une quelconque des revendications 6 à 7 précédentes, dans lesquelles la quantité de résine (ii) par rapport au solvant (i) est supérieure à 45% en poids.

12. Articles imprégnés ou revêtus superficiellement avec la base pour les matériaux de revêtement selon l'une quelconque des revendications 6 à 7 ou avec les formulations selon la revendication 11.
